## Europäisches Patentamt
## European Patent Office
## Office européen des brevets

(19)

(11) Veröffentlichungsnummer : **0 012 964**
**B1**

(12) **EUROPÄISCHE PATENTSCHRIFT**

(45) Veröffentlichungstag der Patentschrift :
**11.11.81**

(21) Anmeldenummer : **79105200.4**

(22) Anmeldetag : **17.12.79**

(51) Int. Cl.³ : **C 08 G 63/66**, **C 09 D 3/64**,
**C 09 D 7/12**

(54) **Alkydharzzusammensetzungen für die Verwendung in Abtönpasten für Farben und Lacke.**

(30) Priorität : **27.12.78 AT 9279/78**

(43) Veröffentlichungstag der Anmeldung :
**09.07.80 (Patentblatt 80/14)**

(45) Bekanntmachung des Hinweises auf die Patenterteilung : **11.11.81 Patentblatt 81/45**

(84) Benannte Vertragsstaaten :
**BE CH DE FR GB IT SE**

(56) Entgegenhaltungen :
**FR - A - 2 243 238**
**FR - A - 2 286 180**
**FR - B - 2 302 328**
**US - A - 4 051 089**

(73) Patentinhaber : **Vianova Kunstharz Aktiengesellschaft**

**A-8402 Werndorf (AT)**

(72) Erfinder : **Zückert, Bertram, Dr.**
**Krottendorferstrasse 90/19**
**A-8052 Graz (AT)**
Erfinder : **Tümmler, Peter, Dr.**
**Grillparzerstrasse 6**
**A-8010 Graz (AT)**

(74) Vertreter : **Blum, Rudolf Emil Ernst et al**
**c/o E. BLUM & CO. Vorderberg 11**
**CH-8044 Zürich (CH)**

Imprimerie Jouve, 17, rue du Louvre, 75001 Paris, France

EP 0 012 964 B1

## Alkydharzzusammensetzungen für die Verwendung in Abtönpasten für Farben und Lacke

Die Erfindung betrifft Alkydharzzusammensetzungen für die Verwendung in universell einsetzbaren Abtönpasten für Farben und Lacke.

Abtön- oder Nuancierpasten sind dem Fachmann als ein wesentliches Mittel zur Herstellung von Farben und Lacken bekannt. Diese Pasten werden durch Dispergierung von Pigmenten, Farbstoffen und gegebenenfalls Füllstoffen in Lackbindemitteln oder anderen Materialien, welche mit dem Bindemittel des Lackes bzw. der Farbe verträglich sein müssen, hergestellt. Nach dem heutigen Stand der Technik ist es nötig, daß der Lackhersteller zur Abtönung, d.h. der Einstellung eines vorgeschriebenen Farbtones, eine Reihe von jeweils gleichfarbigen Abtönpasten für Farben und Lacke auf verschiedener Bindemittelbasis auf Lager hält.

Aufgabe der Erfindung war es nun, eine Bindemittel-Komposition zu finden, welche aufgrund eines breiten Verträglichkeitsspektrums für eine möglichst große Anzahl verschiedener Lack- und Farbenbindemittel einsetzbar ist. Die Voraussetzungen für ein universell einsetzbares Pastenharz sind dabei außer der Verträglichkeit mit einer möglichst großen Palette von Lackbindemitteln auch die Verträglichkeit mit allen Lackverdünnungsmitteln (einschließlich Wasser) und eine extrem gute Benetzungsfähigkeit für Pigmente. Selbstverständlich dürfen durch die Zugabe dieser Pasten weder die Lagerstabilität der Lacke noch die Qualität der daraus hergestellten Überzüge beeinträchtigt werden.

Der Einsatz der meisten Bindemittel scheitert bereits an der begrenzten Verträglichkeit und Löslichkeit. Auch die bekannt gute Kombinierbarkeit der diesbezüglich besten ölmodifizierten Alkydharze ist bei weitem nicht ausreichend.

Versucht man nun, durch eine ausgewogene Zusammensetzung des Harzes und durch Senkung des mittleren Molekulargewichtes, den Bereich der Verträglichkeit und Löslichkeit zu erweitern, so stößt man auf eine weitere Hürde : Mit sinkendem Molekulargewicht nimmt die Geschwindigkeit der Filmbildung und die mechanische und chemische Widerstandsfähigkeit des Filmes beträchtlich ab.

So ist es nach dem heutigen Stand der Technik nicht möglich, ein Alkydharz herzustellen, das einerseits mit langöligen Alkydharzen (Ölgehalt über 65 %) voll verträglich ist und andererseits bei Zumischung zu kurzöligen Alkydharzen (Ölgehalt unter 40 %) keine Beeinträchtigung der Filmhärte bewirkt. Die Schwierigkeiten werden verständlicherweise noch größer, wenn die Kombinierbarkeit auf andere Bindemittelklassen, wie Polyacrylate und Polyurethane, ausgedehnt werden soll. Ein weiteres Problem liegt darin, daß Pigmentpasten bei Einsatz von niedermolekularen Bindemitteln häufig zum Flockulieren neigen. Schließlich kommt dazu, daß das Harz in Wasser nicht nur löslich oder dispergierbar, sondern auch hinreichend lagerstabil sein muß.

Überraschenderweise wurde nun gefunden, daß es nach dem Verfahren gemäß der noch nicht zum Stande der Technik gehörenden Österreichischen Patentanmeldung A 8838/77 bei spezifischer Auswahl der Mengenverhältnisse, der Ausgangsmaterialien und des mittleren Molekulargewichtes möglich ist, die obengenannten Anforderungen zu erfüllen. Gemäß der genannten Anmeldung wird in einer mehrstufigen Reaktion zunächst Polyäthylenglykol (PÄG) mit einem Phenolformaldehydkondensat unter Verätherung umgesetzt, dann das so erhaltene PÄG-modifizierte Phenolharz mit einem trocknenden Öl zur Reaktion gebracht und schließlich das gewonnene PÄG-Phenolharz-modifizierte Öl zu einem Alkydharz verarbeitet. Es hat sich gezeigt, daß die so hergestellten Alkydharze nicht nur zu besonders feinteiligen wäßrigen Emulsionen mit besonders guter Lagerstabilität zu verarbeiten sind, sondern bei Einhaltung bestimmter Auswahlkriterien auch als Dispergiermedium für universell einsetzbare Abtönpasten eingesetzt werden können.

Die Erfindung betrifft demgemäß Alkydharzzusammensetzungen für die Verwendung in universell einsetzbaren Abtönpasten für Farben und Lacke, welche dadurch gekennzeichnet sind, daß sie durch Umsetzung von

5-10 Gew.-% eines Polyäthylenglykols (PÄG) mit einem durchschnittlichen Molekulargewicht zwischen 500 und 5 000, vorzugsweise 1 000-3 000, mit

3- 8 Gew.-% eines durch alkalische Kondensation gewonnenen Formaldehydkondensates eines Mono-$(C_3-C_9)$ alkylphenols und/oder Arylphenols und

8-30 Gew.-% eines natürlichen oder künstlich hergestellten praktisch hydroxylfreien Esters aus ungesättigten Ölfettsäuren und Polyolen und Kondensation dieses Umsetzungsproduktes mit

5-20 Gew.-% ungesättigten Ölfettsäuren,

15-35 Gew.-% p-tert. Butylbenzoesäure,

10-30 Gew.-% cyclischen Dicarbonsäuren und

15-25 Gew.-% Polyolen

zu einem Alkydharz mit einer Säurezahl von 10-25 mg KOH/g, einer Hydroxylzahl von 70 bis 130 mg KOH/g und einer Grenzviskositätszahl von 5,5-7,5 ml/g, gemessen in Chloroform bei 20 °C, erhalten werden.

Es war nicht vorherzusehen, daß sich bei Verwendung der erfindungsgemäßmodifizierten Alkydharze als Dispergiermedium für die in der Lackindustrie üblichen Pigmente und Farbstoffe Pigmentpasten ergeben, die in den verschiedenen Lacken und Farben, wie lufttrocknenden Malerlacken, Einbrennlacken und Reaktionslacken, in Lösungsmittel- oder Wassersystemen, aber auch in Dispersionsfarben eingesetzt werden können.

Das Molekulargewicht des eingesetzten Polyäthylenglykols liegt zwischen 500 und 5 000, bevorzugt zwischen 1 000 und 3 000.

Als Phenol-Formaldehydkondensate werden niedermolekulare, im alkalischen Medium hergestellte Umsetzungsprodukte aus Monoalkylphenolen und/oder Arylphenolen mit Formaldehyd (allgemein als Resole bezeichnet) verwendet, die im Durchschnitt mindestens 1,5, vorzugsweise 1,8 Methylolgruppen pro Molekül enthalten sollen (Methylolfunktionalität mind. 1,5). Die eingesetzten Alkylphenole sind solche, welche als Substituenten Alkylreste mit 3 bis 9 Kohlenstoffatomen aufweisen, wie p-Isopropylphenol, Butylphenol, Amylphenol, Octyl- oder Nonylphenol. Bevorzugt wird p-tert. Butylphenol verwendet. Als Arylphenol kommt vorzugsweise Bisphenol A und Cumylphenol, insbesondere in Mischung mit Alkylphenolen zur Anwendung.

Zur Umsetzung mit dem PÄG-Resol-Umsetzungsprodukt sind ungesättigte Öle mit Jodzahlen von mehr als 125, sowie praktisch hydroxylfreie Ester der in diesen Ölen vorkommenden ungesättigten Fettsäuren mit Polyolen geeignet. Zu diesen Rohstoffen zählen die trocknenden und halbtrocknenden Öle, wie Leinöl Sojaöl, Safloröl, Sonnenblumenöl, dehydratisiertes Rizinusöl, sowie die Ester der in diesen Ölen vorkommenden ungesättigten Fettsäuren mit z.B. Trimethyloläthan, Trimethylolpropan, Pentaerythrit, Neopentylglykol u.ä. Besonders geeignet sind Öle, deren Ölfettsäuren Doppelbindungen in zumindest teilweise konjugierter Konfiguration aufweisen, wie das beim Holzöl, Oiticicaöl, dehydratisierten Rizinusöl, künstlich isomerisierten Ölen, sowie künstlich hergestellten Estern, welche solche Fettsäuren aufweisen, der Fall ist. Die Verätherungsreaktion zwischen PÄG und Phenol-Formaldehydkondensat erfolgt in Gegenwart geringer Mengen an ungesättigten Fettsäuren bei 100 bis 160 °C. Gegebenenfalls kann die Entfernung des Reaktionswassers durch azeotrope Schleppmittel beschleunigt werden. Dieses Reaktionsprodukt wird anschließend bei ca. 200 °C mit dem trocknenden Öl umgesetzt. Die weitere Kondensation zum erfindungsgemäßen Alkydharz erfolgt bei 180 bis 250 °C. Diese fertigen Alkydharze weisen eine Säurezahl zwischen 10 und 25 mg KOH/g, eine Hydroxylzahl von 70 bis 130 mg KOH/g und eine Grenzviskositätszahl von 5,5-7,5 ml/g, gemessen in Chloroform bei 20 °C auf. Vorzugsweise liegen die Löslichkeitsparameter für die verschiedenen Lösungsmittelgruppen in folgenden Bereichen :

| Lösungsmittel | untere Grenze | obere Grenze |
|---|---|---|
| stark H-brückenbildend | max. 8,8 | min. 11,7 |
| schwach H-brückenbildend | max. 7,8 | min. 12,2 |
| nicht H-brückenbildend | max. 8,3 | min. 11,2 |

Für die als Basis für Pigmentpasten geeigneten Alkydharze werden neben den üblichen Ölfettsäuren und der p-tert. Butylbenzoesäure, cycloaliphatische Dicarbonsäuren, wie Tetrahydrophthalsäure, Hexahydrophthalsäure, Endomethylentetrahydrophthalsäure, Hexachloromethylentetrahydrophthalsäure, sowie deren Anhydride eingesetzt. In untergeordnetem Ausmaß können auch aromatische Dicarbonsäuren, wie Phthalsäure (anhydrid) mitverwendet werden.

Als Polyole kommen die für Alkydharze üblichen Tri- und Tetraalkohole, wie Trimethylolalkane, Glycerin, Pentaerythrit in Betracht.

Für die erfindungsgemäßen Alkydharze ist ein Gesamtfettsäureanteil von 27 bis 33 % anzustreben. Der Anteil an Polyäthylenglykol beträgt 5 bis 10 %, der Anteil an Phenolformaldehydkondensat 3 bis 8 %.

Die Zusammensetzung, Herstellung und Verwendung der auf den erfindungsgemäßen Alkydharzen basierenden Pigmentpasten wird in den Beispielen ausführlich beschrieben.

Die folgenden Beispiele erläutern die Herstellung und Verwendung der erfindungsgemäßen Alkydharze. Alle Teile sind Gewichtsteile, Prozentangaben beziehen sich auf Gewichtsprozente.

## Beispiel 1

85 Teile konjugiertes Safloröl, 40 Teile Polyäthylenglykol ($\bar{M}$ = 1 500, PÄG 1 500) und 5 Teile Leinölfettsäure werden auf 150 °C erhitzt. Dann werden in 60 Minuten 25 Teile eines Resoles aus einem Mol p-tert. Butylphenol und 2 Molen Formaldehyd zugesetzt und die Temperatur in weiteren 60 Minuten auf 200 °C gesteigert.

Diese Temperatur wird 75 Minuten gehalten. Dann werden 80 Teile p-tert. Butylbenzoesäure, 70 Teile Tallölfettsäure (Harzsäuregehalt unter 2 %, Jodzahl = 155) 70 Teile Pentaerythrit, 25 Teile Trimethylolpropan und 0,4 Teile Zink-Oktoat mit 8 % Zink zugesetzt. Die Temperatur wird auf 240 °C gesteigert und 60 Minuten gehalten.

Dann wird auf 180 °C gekühlt und eine Mischung aus 60 Teilen Tetrahydrophthalsäureanhydrid und 70 Teilen Hexachloroendomethylentetrahydrophthalsäure zugegeben und bei 180-190 °C unter Azeotropkreislauf mit Xylol bis auf folgende Werte verestert :

Grenzviskositätszahl : 6,3 ml/g
(Chloroform, 20 °C)
Säurezahl : 18,7 mg KOH/g
Hydroxylzahl : 111 mg KOH/g

3

Die Löslichkeitsparameter $\delta_s$ (für stark H-brückenbildende Lösungsmittel, $\delta_m$ (für schwach H-brückenbildende Lösungsmittel) und $\delta_n$ (für nicht H-brückenbildende Lösungsmittel) liegen bei <8,5-12,2 ; <7,5-12,8 bzw. <8,0-11,9.

Das Harz wird auf einen Festkörpergehalt von 70 % in Butylglykol verdünnt.

Beispiele 2 und 3

Nach dem gleichen Verfahren werden folgende Bindemittel hergestellt :

| Beispiel | 2 | 3 |
|---|---|---|
| Rizinenöl | 60 | — |
| Leinöl | 40 | — |
| Holzöl | — | 80 |
| PÄG 1500 | 35 | 30 |
| Leinölfettsäure | 10 | 5 |
| p-tert. Butylphenolresolaus Beispiel 1 | 25 | 20 |
| p-tert. Butylbenzoesäure | 120 | 155 |
| Sojafettsäure | 50 | 50 |
| Pentaerythrit | 75 | 67 |
| Trimethylolpropan | 18 | 28 |
| Zinkoktoat 8 %ig | 0,4 | 0,4 |
| Hexahydrophthalsäureanhydrid | — | 75 |
| Tetrahydrophthalsäureanhydrid | — | 75 |
| o-Phthalsäureanhydrid | 20 | — |
| Grenzviskositätszahl (Chloroform, 20 °C) | 6,5 | 6,1 |
| Säurezahl | 15,2 | 17,4 |
| Hydroxylzahl | 101 | 87 |
| Anlösung | 70 % Butylglykol | |

$\delta_s$ = für stark     H-brücken-<8,5-12,1   <8,5-12,1
$\delta_m$ = für schwach  bildende <7,5-12,6   <7,5-12,5
$\delta_n$ = für nicht     Lösungsmittel 7,8-11,7   7,8-11,5

Herstellung der Pigmentpasten

Der maximale Pigmentgehalt für anorganische Pigmente in den Pigmentpasten wurde nach der Methode von Daniel bestimmt. Für die Ermittlung der günstigsten Mahlgutzusammensetzung organischer Pigmente wurde die spezifische Oberfläche der einzelnen Pigmente herangezogen. Die entsprechenden Werte sind in der Tabelle 1 (in Klammern) angegeben. Alle Pasten wurden auf der Perlmühle hergestellt. Mit gleichem Erfolg können auch die anderen üblichen Mahlaggregate wie Dreiwalzen, Sandmühlen, Attritoren, Kugelmühlen zur Dispergierung der Pigmente in den erfindungsgemäßen Alkydharzen herangezogen werden.

Die Bindemittel mit einem Festkörper von 70 % in Butylglykol wurden mit Shellsol A und sec. Butanol im Verhältnis 1 : 1 auf 40 % Festkörper verdünnt, um eine entsprechende Verarbeitungsviskosität für die Perlmühle zu erreichen. Um einem Ausschwimmen der Pigmente in den abzutönenden Grundlacken vorzubeugen, wurde den Pasten bei der Herstellung ein anionenaktives Netz- und Antiausschwimm-Mittel zugesetzt. Die Pigmentpasten sind uneingeschränkt haltbar und lassen sich leicht in die angeführten Lack- und Dispersionsfarben einrühren. Rührgeräte mit Scherkräften sind für die Einarbeitung der Pasten nicht notwendig. Beispiele für das Abtönen von Grundlacken mit den Pasten sind in Tabelle 1 zusammengestellt.

Tabelle 1 : Lacksuzammensetzungen
Die Prüflacke 1-14 enthalten das Alkydharz gemäß
Beispiel 1 ; die Lacke 15-18 enthalten das Harz gemäß
Beispiel 2 ; die Lacke 19-22 das Harz gemäß Beispiel 3.

| Grund-lack Nr. 100 Tle. | Prüf-lack Nr. | a | b | c | d | e | Pigment zugesetzte Teile f | g | h | i | j | k | l | m | n |
|---|---|---|---|---|---|---|---|---|---|---|---|---|---|---|---|
| 1 | A | 5 | | | | | | | | | | | | | |
| 2 | B | | | | | | | | | | | | | 5 | |
| 3 | C | | | | | | | | | | | | | 5 | |

Tabelle 1 (Gefolge)

| Grund-lack Nr. 100 Tle. | Prüf-lack Nr. | Pigment zugesetzte Teile | | | | | | | | | | | | | |
|---|---|---|---|---|---|---|---|---|---|---|---|---|---|---|---|
| | | a | b | c | d | e | f | g | h | i | j | k | l | m | n |
| 4 | D | | | | | 5 | | | | | | | | | |
| 5 | E | | | | | | | | | | 5 | | | | |
| 6 | F | | | | | | | | | | 0,1 | 0,2 | | | |
| 7 | G | | 15 | | | | | | | | | | | | |
| 8 | H | | | | | | | | | | | | | | 5 |
| 9 | I | | | | | | | | 8 | | | | | | |
| 10 | J | | | 10 | | | | | | | | | | | |
| 11 | K | | | | | 10 | | | | | | | | | |
| 12 | L | | | | | | | | | 5 | | | | | |
| 13 | M | | | | | | | 5 | | | | | | | |
| 14 | N | | | | 7 | | | | | | | | | | |
| 15 | B | | | | | 4 | | | | | | | | | |
| 16 | C | | | | | | 5 | | | | | | | | |
| 17 | E | | | | | | | | | | | 7 | | | |
| 18 | F | | | | | | | | | | 0,2 | | | | |
| 19 | G | | 10 | | | | | | | | | | | | |
| 20 | H | 10 | | | | | | | | | | | | | |
| 21 | J | | | | | 12 | | | | | | | | | |
| 22 | L | | | | | | | | 5 | | | | | | |

Erläuterungen zur Tabelle 1 :

(I) Pigmentpasten unter Verwendung des Alkydharzes gemäß Beispiel 1. Die Angabe in Klammern gibt das Pigment-Bindemittelverhältnis an.

| | | |
|---|---|---|
| (a) | Eisenoxidgelb-Paste | (2 : 1) |
| (b) | Eisenoxidrot-Paste | (3,75 : 1) |
| (c) | Chromoxidgrün-Paste | (3,75 : 1) |
| (d) | Pigment Yellow 98-Paste | (0,5 : 1) |
| (e) | Pigment Yellow 109-Paste | (1 : 1) |
| (f) | Pigment Orange 43-Paste | (0,5 : 1) |
| (g) | Pigment Red 168-Paste | (0,5 : 1) |
| (h) | Pigment Red 112-Paste | (0,75 : 1) |
| (i) | Pigment Violett 19-Paste | (0,5 : 1) |
| (j) | Pigment Violett 23-Paste | (0,375 : 1) |
| (k) | Pigment Blue 15-Paste | (0,375 : 1) |
| (l) | Pigment Blue 60-Paste | (0,5 : 1) |
| (m) | Pigment Green 7-Paste | (0,5 : 1) |
| (n) | Flammruß-Paste | (0,5 : 1) |

(II) Grundlacke in denen die Pigmentpasten eingesetzt wurden. Die Zusatzmenge bezieht sich jeweils auf 100 Teile Lack.

| Nr. | LACKTYPE | Basis und Pigmentierung |
|---|---|---|
| (A) | Alkydharzlack, oxidativ trocknend | Niedrigviskoses Phthalatharz mit 67 % Sojaöl. Pigmentiert mit Titandioxid. Pigment/Bindemittel = 1 : 1 |
| (B) | Alkydharzlack oxidativ trocknend | Niedrigviskoses, leicht Polyamidthixotropiertes Phthalatharz mit 68 % nichtgilbender Fettsäuren. Pigmentiert mit Chromgelb. Pigment/Bindemittel = 0,5 : 1 |
| (C) | Autoreparaturlack oxidativ trocknend | Hochviskoses, sehr schnell trocknendes Phthalatharz mit 48 % nichtgilbender Fettsäuren. Pigmentiert mit Titandioxid. Pigment/Bindemittel = 0,8 : 1 |
| (D) | Autodecklack blau, für 110-130 °C Einbrenntemperatur | Kombination von einem mittelviskosen aminharzreaktiven Alkydharz mit 37 % synthetischen Fettsäuren, einem hochreaktiven, elastischen Alkydharz mit 35 % Rizinenöl und einem hochreaktiven Melaminharz. Pigmentiert mit Titandioxid und Pigment Blue 15. Pigment/Bindemittel = 0,5 : 1 |
| (E) | Autodecklack, weiß für 130 °C Einbrenntemperatur | Kombination von einem mittelviskosen, aminharzreaktiven Alkydharz mit 37 % Kokosöl, einem mittelviskosen, aminharzreaktiven, elastischen Alkydharz mit 45 % Rizinenöl und einem mittelreaktiven Melaminharz. Pigmentiert mit Titandioxid. Pigment/Bindemittel = 0,8 : 1 |
| (F) | Haushaltsgeräte: weiß, für 130 °C Einbrenntemperatur | Kombination eines mittelreaktiven, mit Aminharzen vernetzbaren Acrylharzes und einem hochreaktiven Melaminharz. Pigmentiert mit Titandioxid. Pigment/Bindemittel = 0,8 : 1 |
| (G) | Wasserverdünnbarer Alkydharzlack oxidativ trocknend | Oxidativ trocknendes Alkydharz mit 55 % nichtgilbenden Fettsäuren. Pigmentiert mit Titandioxid. Pigment/Bindemittel = 1 : 1 |
| (H) | Wasserverdünnbarer Einbrennlack für 140 °C Einbrenntemperatur | Kombination eines leicht thixotropen aminharzreaktiven, wasserverdünnbaren Alkydharzes mit einem niedrigreaktiven Hexamethoxymethylmelamin. Pigmentiert mit Titandioxid. Pigment/Bindemittel = 0,8 : 1 |
| (I) | Industrielack gelb, oxidativ trocknend | Hochviskoses, copolymerisierbares und mit Isocyanat modifiziertes Alkydharz. Pigmentiert mit Chromgelb. Pigment/Bindemittel = 0,45 : 1 |
| (J) | Acrylharzfassadenfarbe | Physikalisch trocknendes plastifiziertes Mischpolymerisat. Pigmentiert mit Titandioxid und Extendern. Pigment/Bindemittel = 3,5 : 1 |
| (K) | Dispersionsfarbe: | Feinteilige Acrylatdispersion. Pigmentiert mit Titandioxid und Extendern. Pigment/Bindemittel = 1,7 : 1 |
| (L) | Zweikomponenten-Autoreparaturlack Acryl-Isocyanat-Basis | Kombination eines polyisocyanatvernetzbaren Acrylharzes mit einer mittleren Hydroxylzahl von 100 und einem polyfunktionellen, aliphatischen Isocyanat mit einem Isocyanatgehalt von 16-17 %. Pigmentiert mit Titandioxid. Pigment/Bindemittel = 0,8 : 1 |
| (M) | Zweikomponenten-Industrielack Alkyd-Isocyanat-Basis | Kombination eines hochreaktiven, mit Polyisocyanat vernetzbaren, gesättigten Polyesters mit einer mittleren Hydroxylzahl von 245 und einem polyfunktionellen, aliphatischen Isocyanat mit einem Isocyanatgehalt von 16-17 %. Pigmentiert mit Titandioxid. Pigment/Bindemittel = 0,8 : 1 |
| (N) | Zweikomponenten-SH-Lack | Säurehärtendes, mit einem Alkydharz plastifiziertes Harnstoffharz. Pigmentiert mit Titandioxid und Extendern. Pigment/Bindemittel = 1,2 : 1 |

**0 012 964**

Prüfung der Lacke :

In der Tabelle 2 werden die Prüfwerte für die Lacke angegeben, wobei die Abtönpasten die erfindungsgemäßen Alkyldharze enthalten. Die Vergleichswerte, welche bei Prüfung der Grundlacke erhalten werden, sind in Tabelle 3 zusammengefaßt. Wie sich beim Vergleich der beiden Tabellen ergibt, wird das Eigenschaftsbild durch den Zusatz praktisch nicht verändert.

Die Prüfung der Flockulationsbeständigkeit durch Lagerung des konzentrierten Lackes und einer auf Verarbeitungsviskosität verdünnten Form ergab nach 4-wöchiger Lagerung keinen negativen Einfluß durch die zugesetzte Farbpaste. Die Lagerstabilität der Wasserlacke zeigte bei 3-monatiger Lagerung keine Veränderung durch die zugesetzte Farbpaste.

Tabelle 2

| Nr. | A | B | C | D | E | F | G | H |
|-----|-----|-----|------|-----|-----|-----|-----|-----|
| 1 | 65 | 85 | 2,32 | 300 | — | — | — | 34 |
| 2 | 72 | 92 | 2,45 | 185 | — | — | — | 45 |
| 3 | 35 | 88 | 2,43 | 60 | 8 | 0-1 | 45 | 75 |
| 4 | 30 | 90 | 2,37 | — | 7,8 | 0-1 | 80 | 112 |
| 5 | 42 | 85 | 2,41 | — | 6,9 | 0 | 80 | 140 |
| 6 | 32 | 87 | 2,34 | — | 7,2 | 0-1 | 80 | 165 |
| 7 | 52 | 78 | 2,25 | 240 | — | — | — | 36 |
| 8 | 34 | 89 | 2,38 | — | 6,5 | 1-2 | 65 | 110 |
| 9 | 38 | 82 | 2,28 | — | 7,4 | 2-3 | 35 | 65 |
| 10 | 105 | — | — | 120 | — | — | — | — |
| 11 | 85 | — | — | 180 | — | — | — | — |
| 12 | 30 | 85 | 2,36 | 45 | 8,1 | 1 | 65 | 87 |
| 13 | 32 | 87 | 2,41 | 40 | 7,6 | 0-1 | 60 | 95 |
| 14 | 34 | — | — | 80 | — | — | — | 82 |
| 15 | 55 | 88 | 2,38 | 192 | — | — | — | 42 |
| 16 | 35 | 87 | 2,40 | 72 | 7,6 | 1 | 35 | 74 |
| 17 | 32 | 78 | 2,42 | — | 7,4 | 0-1 | 80 | 138 |
| 18 | 35 | 90 | 2,28 | — | 7,0 | 0 | 75 | 152 |
| 19 | 65 | 78 | 2,32 | 215 | — | — | — | 34 |
| 20 | 30 | 82 | 2,27 | — | 6,8 | 1-2 | 65 | 112 |
| 21 | 125 | — | — | 120 | — | — | — | — |
| 22 | 38 | 90 | 2,38 | 45 | 7,8 | 1 | 70 | 83 |

Tabelle 3
Vergleichswerte für die Grundlacke

| Nr. | A | B | C | D | E | F | G | H |
|-----|-----|-----|------|-----|-----|-----|-----|-----|
| 1 | 62 | 83 | 2,30 | 315 | — | — | — | 30 |
| 2 | 60 | 93 | 2,42 | 175 | — | — | — | 38 |
| 3 | 32 | 85 | 2,45 | 65 | 7,8 | 0-1 | 40 | 78 |
| 4 | 30 | 85 | 2,35 | — | 8,0 | 0-1 | 70 | 120 |
| 5 | 36 | 82 | 2,40 | — | 7,2 | 0 | 80 | 145 |
| 6 | 34 | 88 | 2,34 | — | 7,2 | 0 | 80 | 160 |
| 7 | 54 | 80 | 2,28 | 220 | — | — | — | 38 |
| 8 | 33 | 86 | 2,35 | — | 6,2 | 2 | 70 | 118 |
| 9 | 42 | 84 | 2,27 | — | 7,8 | 2 | 30 | 60 |
| 10 | 92 | — | — | 120 | — | — | — | — |
| 11 | 90 | — | — | 185 | — | — | — | — |
| 12 | 32 | 82 | 2,34 | 50 | 7,8 | 1 | 65 | 80 |
| 13 | 36 | 88 | 2,42 | 45 | 7,9 | 1-2 | 65 | 87 |
| 14 | 41 | — | — | 75 | — | — | — | 76 |

Erläuterungen zur Tabelle 2 und 3

(A) Schichtstärke μm
(B) Glanz gemessen mit Gonioreflektometer GR-COMP (Vianova Kunstharz AG)
(C) Schleier, gemessen mit Gonioreflektometer GR-COMP (Vianova Kunstharz AG)
(D) Trocknung am Drying Recorder in Minuten
(E) Tiefung nach Erichsen
(F) Gitterschnitt DIN 53 151
(G) Schlagprüfung
(H) Pendelhärte nach König DIN 53 157

**Ansprüche**

1. Alkydharzzusammensetzungen für die Verwendung in universell einsetzbaren Abtönpasten für Farben und Lacke, dadurch gekennzeichnet, daß sie durch Umsetzung von

5-10 Gew.-% eines Polyäthylenglykols (PÄG) mit einem durchschnittlichen Molekulargewicht zwischen 500 und 5 000, vorzugsweise 1 000-3 000, mit

3- 8 Gew.-% eines durch alkalische Kondensation gewonnenen Formaldehydkondensates eines Mono-$(C_3-C_9)$ alkylphenols und/oder Arylphenols und

8-30 Gew.-% eines natürlichen oder künstlich hergestellten praktisch hydroxylfreien Esters aus ungesättigen Ölfettsäuren und Polyolen und Kondensation dieses Umsetzungsproduktes mit

5-20 Gew.-% ungesättigten Ölfettsäuren,

15-35 Gew.-% p-tert. Butylbenzoesäure,

10-30 Gew.-% cyclischen Dicarbonsäuren und

15-25 Gew.-% Polyolen

zu einem Alkydharz mit einer Säurezahl von 10-25 mg KOH/g, einer Hydroxylzahl von 70 bis 130 mg KOH/g und einer Grenzviskositätszahl von 5,5-7,5 ml/g, gemessen in Chloroform bei 20 °C, erhalten werden.

2. Alkydharzzusammensetzungen nach Anspruch 1, dadurch gekennzeichnet, daß sie folgende Bereiche der Löslichkeitsparameter in den verschiedenen Lösungsmittelgruppen aufweisen :

| Lösungsmittel | untere Grenze | obere Grenze |
|---|---|---|
| stark H-brückenbildend | max. 8,8 | min. 11,7 |
| schwach H-brückenbildend | max. 7,8 | min. 12,2 |
| nicht H-brückenbildend | max. 8,3 | min. 11,2 |

3. Alkydharzzusammensetzungen nach den Ansprüchen 1 und 2, dadurch gekennzeichnet, daß sie einen Gesamtfettsäureanteil von 27-33 % aufweisen.

4. Alkydharzzusammensetzungen nach den Ansprüchen 1 bis 3, dadurch gekennzeichnet, daß sie als Dicarbonsäuren cycloaliphatische Dicarbonsäuren enthalten.

5. Verwendung der Alkydharzzusammensetzungen nach den Ansprüchen 1 bis 4 als Basis für Abtönpasten für Lacke und Farben.

**Claims**

1. Alkyd resin compositions for the use in universal tinting pastes for paints and enamels, characterised in that they are obtained through reaction of

5-10 % by weight of a polyethyleneglycol (PEG) with an average molecular weight of between 500 to 5 000, preferably 1 000 to 3 000,

3- 8 % by weight of a formaldehyde condensate obtained through alkali condensation of a mono ($C_3$-$C_9$) alkyl phenol and/or aryl phenol, and

8-30 % by weight of a natural or synthetic practically hydroxyfree ester of unsaturated oil fatty acids and polyols, and condensation of this reaction product with

5-20 % by weight of unsaturated oil fatty acids,

15-35 % by weight of p-tert. butyl benzoic acid

10-30 % by weight of cyclic dicarboxylic acids and

15-25 % by weight of polyols

to form an alkyd resin with an acid value of from 10-25 mg KOH/g a hydroxyl number of from 70 to 130 mg KOH/g and an intrinsic viscosity of from 5.5-7.5 ml/g, measured in chloroform at 20 °C.

2. Alkyd resin compositions according to claim 1, characterized in that they show the following ranges of solubility parameters with the various groups of solvents :

| solvent | lower limit | upper limit |
|---|---|---|
| strong formation of H-bridges | max. 8.8 | min. 11.7 |
| poor formation of H-bridges | max. 7.8 | min. 12.2 |
| no formation of H-bridges | max. 8.3 | min. 11.2 |

3. Alkyd resin compositions according to claims 1 and 2, characterized in that they contain a total of fatty acids of from 27 to 33 %.

4. Alkyd resin compositions according to claims 1 to 3, characterized in that they contain cycloaliphatic dicarboxylic acids as the dicarboxylic acid.

5. Use of alkyd resin compositions according to claims 1 to 4, as a basis for tinting pastes for paints and enamels.

**Revendications**

1. Composition de résine alkyde utilisable dans les pâtes à nuancer à usage universel pour peintures et vernis, caractérisé en ce qu'elle est obtenue en faisant réagir :

5 à 10 % en poids d'un polyéthylèneglycol (PEG) ayant un poids moléculaire moyen compris entre 500 et 5 000, de préférence entre 1 000 et 3 000, avec

3 à 8 % en poids d'un condensat de formaldéhyde et d'un mono-($C_3$-$C_9$) alkyl-phénol et/ou arylphénol, obtenu par condensation alcaline ; et

8 à 30 % en poids d'un ester, naturel ou synthétique et pratiquement exempt de groupes hydroxyle, d'acides gras d'huile insaturés et de polyols, le produit de réaction ainsi obtenu étant ensuite condensé avec

5 à 20 % en poids d'acides gras d'huile insaturés,

15 à 35 % en poids d'acide p-tert. butylbenzoïque,

10 à 30 % en poids d'acides dicarboxyliques cycliques et

15 à 25 % en poids de polyols

ce qui conduit à l'obtention d'une résine alkyde ayant un indice d'acide de 10 à 25 mg de KOH/g, un indice hydroxyle de 70 à 130 mg de KOH/g et une viscosité limite de 5,5 à 7,5 ml/g, mesurée dans le chloroforme à 20 °C.

2. Composition selon la revendication 1, caractérisée en ce qu'elle présente les paramètres de solubilité suivants dans différents groupes de solvants :

| Solvant | limite inférieure | limite supérieure |
|---|---|---|
| formant de fortes liaisons H | max. 8,8 | min. 11,7 |
| formant de faibles liaisons H | max. 7,8 | min. 12,2 |
| ne formant pas de liaisons H | max. 8,3 | min. 11,2 |

3. Composition selon les revendications 1 et 2, caractérisée en ce que la totalité des acides gras constitue 27 à 33 %.

4. Composition selon les revendications 1 à 3, caractérisée en ce qu'elle contient des acides dicarboxyliques cycloaliphatiques à titre d'acides dicarboxyliques.

5. Utilisation de la composition selon les revendications 1 à 4, en tant que base pour pâtes à nuancer pour peintures et vernis.